# EUROPEAN PATENT SPECIFICATION

(11) **EP 3 466 093 B1**
(45) Date of publication and mention of the grant of the patent: **01.12.2021**
(21) Application number: 17725564.3
(22) Date of filing: 18.05.2017
(51) Int. Cl.: H04N 21/845, H04N 21/2343, H04N 21/81, H04N 21/218

(54) **METHOD, DEVICE, AND COMPUTER PROGRAM FOR ADAPTIVE STREAMING OF VIRTUAL REALITY MEDIA CONTENT**
VERFAHREN, VORRICHTUNGEN UND COMPUTERPROGRAMM ZUM ADAPTIVEN STREAMING VON MEDIENINHALTEN DER VIRTUELLEN REALITÄT
PROCÉDÉ, DISPOSITIF ET PROGRAMME INFORMATIQUE POUR LA DIFFUSION CONTINUE ADAPTATIVE DE CONTENU MULTIMÉDIA DE RÉALITÉ VIRTUELLE

(30) Priority: 23.05.2016 GB 201609056
(43) Date of publication of application: 10.04.2019
(73) Proprietor: Canon Kabushiki Kaisha, Tokyo 146-8501 (JP)
(72) Inventor: TAQUET, Jonathan, 35160 TALENSAC (FR); DENOUAL, Franck, 35190 SAINT DOMINEUC (FR); OUEDRAOGO, Naël, 35330 MAURE DE BRETAGNE (FR)
(74) Representative: Santarelli
(86) International application number: PCT/EP2017/062050
(87) International publication number: WO 2017/202699

(56) References cited:
- EP-A1- 2 824 885
- WO-A1-2015/197818
- LIM SEONG YONG ET AL: "Tiled panoramic video transmission system based on MPEG-DASH", 2015 INTERNATIONAL CONFERENCE ON INFORMATION AND COMMUNICATION TECHNOLOGY CONVERGENCE (ICTC), IEEE, 28 October 2015 (2015-10-28), pages 719-721, XP032829946, DOI: 10.1109/ICTC.2015.7354646 [retrieved on 2015-12-11]
- MARTIN PRINS ET AL: "A hybrid architecture for delivery of panoramic video", PROCEEDINGS OF THE 11TH EUROPEAN CONFERENCE ON INTERACTIVE TV AND VIDEO, EUROITV '13, 1 January 2013 (2013-01-01), page 99, XP055093376, New York, New York, USA DOI: 10.1145/2465958.2465975 ISBN: 978-1-45-031951-5
- LUCIA D 'ACUNTO ET AL: "MPD signalling of 360 content properties for VR applications", 115. MPEG MEETING; 30-5-2016 - 3-6-2016; GENEVA; (MOTION PICTURE EXPERT GROUP OR ISO/IEC JTC1/SC29/WG11), no. m38605, 25 May 2016 (2016-05-25), XP055327831,
- XIN WANG: "Adaptive Streaming of Omnidirectional Video in DASH", 115. MPEG MEETING; 30-5-2016 - 3-6-2016; GENEVA; (MOTION PICTURE EXPERT GROUP OR ISO/IEC JTC1/SC29/WG11),, no. m38670, 31 May 2016 (2016-05-31), XP030067022,
- EMMANUEL THOMAS ET AL: "Concrete examples of 360 streaming with existing DASH signalling", 116. MPEG MEETING; 17-10-2016 - 21-10-2016; CHENGDU; (MOTION PICTURE EXPERT GROUP OR ISO/IEC JTC1/SC29/WG11),, no. m39562, 20 October 2016 (2016-10-20), XP030067907,
- RYOHEI TAKAHASHI ET AL: "[CE VR] Spatial information for DASH VR", 116. MPEG MEETING; 17-10-2016 - 21-10-2016; CHENGDU; (MOTION PICTURE EXPERT GROUP OR ISO/IEC JTC1/SC29/WG11),, no. m39245, 12 October 2016 (2016-10-12), XP030067591,

## Description

### FIELD OF THE INVENTION

The present invention relates to the technical field of video streaming and more particularly to a method, a device, and a computer program for adaptive streaming of virtual reality media content, for example over an IP network such as Internet using the http protocol.

### BACKGROUND OF THE INVENTION

A media presentation is usually composed of several media contents such as audio and video. These media contents can be sent from a server to a client for being jointly played by a client device.

To improve user experience and in particular to offer immersive experience, videos and even audio may be omnidirectional (or multi-directional or pluri-directional). When applied to videos, also known as 360° panoramic video, the user feels to be located in the scene that is displayed.

An omnidirectional video may be obtained from a 360° camera and/or by combining images of video streams obtained from several cameras, for example mounted on a special rig so that all the cameras have a common nodal point. Such a combination of images is known as image stitching or camera stitching.

Such an omnidirectional video may be rendered via head mounted displays or through projection onto a curved screen surrounding users. It may also be displayed on traditional 2D screens with navigation menu in the user interface to pan into the omnidirectional video. It is often referred to as virtual reality (VR) since the user feels to be in a virtual world. When virtual objects are added to the omnidirectional video, it is referred to as augmented reality (AR).

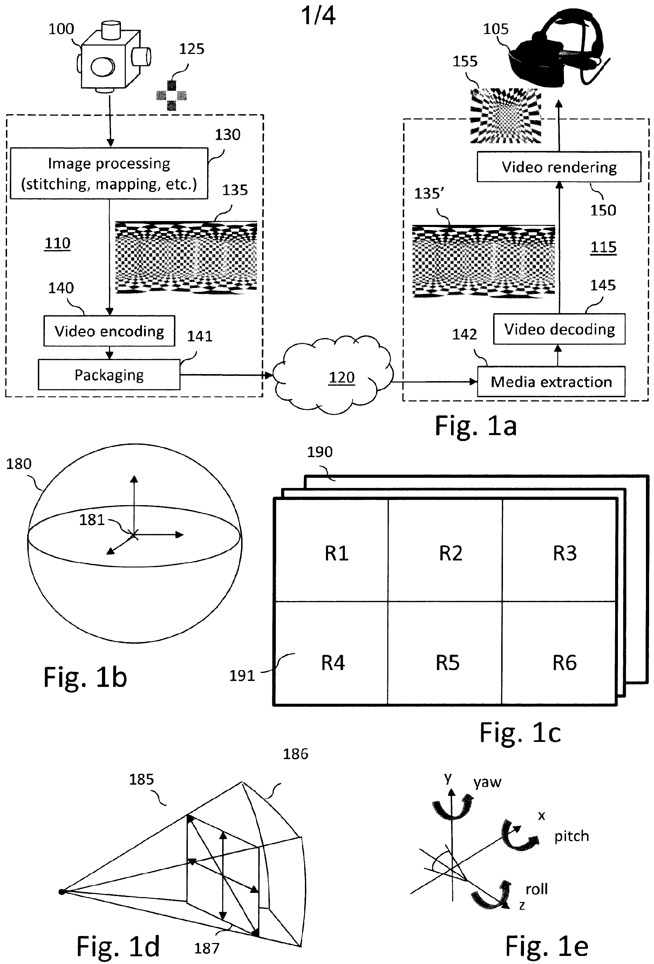

**Figure 1a** illustrates an example of data flow for capturing, transmitting, and rendering an omnidirectional media from a server to a client.

As illustrated, this media has a video content acquired from camera system 100 and transmitted to head-mounted display (HMD) 105 via server 110, client 115, and network 120.

For the sake of illustration, the used camera system is based on a set of six standard cameras, associated with each face of a cube. It is used to obtain images representing the real scene surrounding the camera system. As illustrated with representation 125, according to this arrangement, one camera provides front images, one camera provides rear images, one camera provides left images, one camera provides right images, one camera provides bottom images, and one camera provides top images.

The images obtained from camera system 100 are processed (step 130) in server 110 to create a 360 video stream also called an omnidirectional video stream or a virtual reality media data stream. The virtual reality media data stream may be a stream of panorama images like panorama image stream 190 in Figure 1c, i.e. a stream of 360° images, or a stream of standard video streams, for example a stream of the video streams obtained from each camera of camera 100.

The type of processing depends on the type of virtual reality media data stream to be created. For example, the processing may comprise a stitching step if the virtual reality media data stream is a stream of panorama images and may comprise a mapping step if the virtual reality media data stream is a stream of video streams (i.e. a stream of stitchable images). In the latter case, stitching of images may be performed on the client's end for image rendering.

While considering a wide view of a scene, for example a 360° view in both horizontal and vertical dimensions, as illustrated with reference 180 in Figure 1b, a panorama image of the wide view corresponds to a projection (denoted a capturing projection) of this wide view captured by one image sensor or a set of image sensors onto a 2D image. Accordingly, a capturing projection scheme is associated with each panorama image, for example to conserve appropriate proportions in the recorded scene. In particular, the used capturing projection scheme may not reflect the reality and can rather be an artistic representation of the wide view (for example like with "little planet" photography effect that is based on a stereographic projection https://en.wikipedia.orf/wiki/Stereographic_projection).

It is to be noted that a 360° view may be a real 360° view corresponding to a 360° view along an horizontal plane and a 360° view along a vertical plane or a pseudo 360° view corresponding, for example, to a 360° view along a horizontal plane and a 210°, or less, view along a vertical plane. For example, a 180° panorama in horizontal dimension can also be considered as a wide view as soon as the field of view is greater than or equal to the human eye's field-of-view, so as to create immersive experience. The terms 360° view or 360° video are generally used when the recorded scene corresponds either to a real-world sequence or a synthetic sequence.

For the sake of illustration, the images obtained from camera 100 are combined for creating a virtual reality media data stream that comprises a set of successive panorama images, as illustrated with panorama representation 135 (or with panorama image stream 190 in Figure 1c).

After the virtual reality media data stream has been created, it is encoded at step 140 into a video bitstream and then packaged (or encapsulated) at step 141 in a file or in segment files to be transmitted to client 115 over network 120, for example over Internet using http (*HyperText Transfer Protocol*) protocol. For the sake of illustration, packaging may comprise encapsulation of the video bitstream into ISOBMFF. The resulting file or segment files can be mp4 file or mp4 segments. During the packaging, audio stream may be added to the video bitstream as well as metadata tracks providing information on the video or on the audio streams.

Any packaging or encapsulation format providing descriptive metadata and timing information for the media data stream could be used here. For example, these formats can be MPEG-2 Transport Stream, Common Media Application Format, WebM, and any format from which descriptive information can be extracted to help a streaming client to select the most suitable versions of the media data.

Upon reception, the packaged virtual reality media file or media segments are parsed during step 142 so as to extract a data stream that is decoded at step 145. In case of ISOBMFF file or segments received at step 142, the parsing is typically handled by an mp4 reader or mp4 parser that, from the descriptive metadata, can extract a video bitstream or a video sub-bitstream. According to the illustrated example, the panorama representation 135' of the decoded panorama images corresponds to the panorama representation 135.

Next, the decoded virtual reality media data stream is processed for video rendering (step 150). It is to be noted that video rendering depends on several parameters among which is the point of view of the user, the point of sight, and the projection(s) used to create the panorama images. As illustrated with rendering representation 155, rendering the video comprises a step of re-projecting the decoded panorama images. The images obtained from such a re-projection (denoted rendering projection) are displayed in the HMD 105.

For handling stereoscopic views, the process described by reference to Figure 1a may be duplicated.

It is to be noted here that there exist several standards of virtual reality media data stream (e.g. ISO/IEC 23000-19) and that the projections used to create panorama images are generally the followings (which is a non-limitative list):
- sphere,
- squished sphere,
- cube,
- cylinder,
- pyramid, and
- none.

Depending on the type of projection that is used, there exist mathematical relations between the real-world coordinates in the real scene and the 2D coordinates in the panorama images. Indeed, such a projection is the projection of the scene to be displayed onto a surrounding surface (that may take the shape of a sphere, a squished sphere, a cube, a cylinder, or a pyramid) from one or more reference points. This surface on which is projected the scene may be remapped onto an intermediate representation, like an equirectangular representation as illustrated with reference 135 for example, in order to simplify the video rendering.

It is to be noted that a rendering projection depends on a viewpoint that corresponds to the observation direction of the scene wide view in the surface on which the scene is projected as illustrated in Figure 1d. In conjunction with the reference point(s), the viewpoint defines a reference frame or a reference view. It can be defined with a yaw value, a pitch value, and a roll value (as depicted in Figure 1e), corresponding to the rotation parameters of the reference frame in view of an absolute reference frame (corresponding to a default viewpoint for example). Typically, for HMD systems, the yaw angle corresponds to a rotation from left-to-right or right-to-left of the head, the pitch angle corresponds to a rotation from top to bottom or bottom to top and the roll corresponds to a rotation (inclination) of the head around the viewing direction axis.

In the case of a spherical projection or of a squished spherical projection, the center point of the 2D panorama projection typically corresponds to the projection along the main viewpoint orientation defined as the elevation orientation (e.g. along the z axis in a (*x, y, z*) right-handed coordinate system) toward the reference point (e.g. center 181 of the sphere 180 in Figure 1b). The viewpoint also makes it possible to determine the poles of the sphere.

Similarly, for a cubical projection, the viewpoint makes it possible to determine the position of the cube in the space and thus, to determine the position of the front face of the cube (typically the center of which corresponds to the projection of the reference point along the main viewpoint orientation), as well as the top, bottom, left, right, and rear faces of the cube.

It is also to be noted that panorama images may be made of panorama regions, as illustrated with reference 191 in Figure 1c, wherein each region corresponds to a particular projection. Each region is a set of pixels. Its shape may be rectangular or not. Some projections may generate a non-continuous map of pixels. For instance, the cubic projection may be split in 6 projection areas each corresponding to one face of a cube.

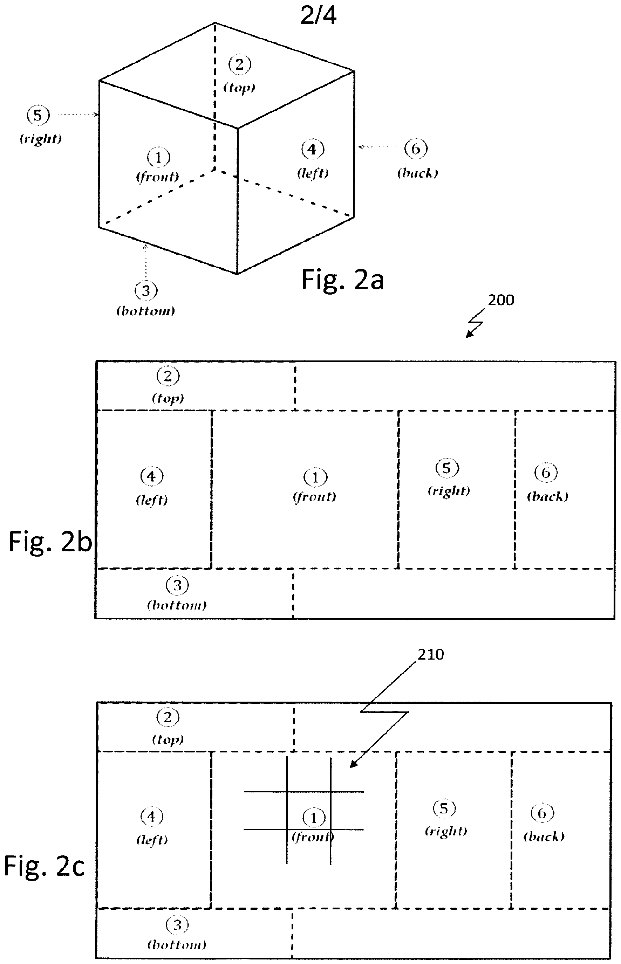

**Figure 2****,** comprising Figures 2a, 2b and 2c, illustrates an example of a panorama representation comprising several regions, based on a cubical projection, each region being associated with a projection of a surface.

Figure 2a illustrates the six faces of a cube of which the surfaces, representing projected images, are to be mapped onto the panorama representation illustrated in Figure 2b.

The panorama representation 200 comprises 6 panorama regions denoted ① to ⑥. As indicated,
- reference ① corresponds to the projection of the front view on the front face of the cube,
- reference ② corresponds to the projection of the top view on the top face of the cube,
- reference ③ corresponds to the projection of the bottom view on the bottom face of the cube,
- reference ④ corresponds to the projection of the left view on the left face of the cube,
- reference ⑤ corresponds to the projection of the right view on the right face of the cube, and
- reference ⑥ corresponds to the projection of the rear view on the back face of the cube.

Therefore, according to this projection, each region of the panorama image corresponds to one face of the cube and thus, to one user's view among the front, top, bottom, left, right and rear views.

It is also possible to use two specific regions of a panorama image to represent each view of a stereoscopic view (i.e. one region corresponds to a left view and another region corresponds to another view), each region being the result of the same panorama projection based on different reference points, for example one for each eye.

As illustrated in Figure 2c, one or more regions may be split into sub-regions, for example to give access to these sub-regions (making it possible to zoom in these areas during rendering). For the sake of illustration, the front view or region 210 is split into nine sub-regions or spatial parts or portions. It is up to the content author or provider to decide the granularity of the spatial access he/she offers in the panorama images.

It has been observed that stitching several images of UHD (*Ultra High Definition*) video streams into panorama images of a virtual reality media data stream leads to a very high bitrate and very high resolution virtual reality media data stream. Therefore, from a system's perspective and to avoid wasting bandwidth and to remain compliant with processing capabilities of the client players, there is a need to optimize access to the virtual reality media data.

Such a need is even more important that a virtual reality media data stream may be used for other purposes than the one described by reference to Figure 1a. In particular, a virtual reality media data stream can be used for displaying 360° images with specific displays like a 360° array of projectors. It can also be used to display particular field of view and/or change the point of view, the field of view, and the point of sight. Document WO2015197818 describes a method of streaming HEVC-tiled video data.

### SUMMARY OF THE INVENTION

The present invention has been devised to address one or more of the foregoing concerns.

In this context, there is provided a solution for adaptive streaming of virtual reality media content, for example over an IP network such as Internet using the http protocol.

The invention is set out in the appended claims.

### BRIEF DESCRIPTION OF THE DRAWINGS

Further advantages of the present invention will become apparent to those skilled in the art upon examination of the drawings and detailed description. It is intended that any additional advantages be incorporated herein.

Embodiments of the invention will now be described, by way of example only, and with reference to the following drawings in which:
**Figure 1****,** comprising Figures 1a, 1b, 1c, 1d, and 1e, illustrates an example of a data flow for capturing, transmitting, and rendering an omnidirectional video from a server to a client as well as examples of a wide view, a viewpoint, a panorama image stream, and a panorama image having panorama regions.
**Figure 2****,** comprising Figures 2a, 2b, and 2c, illustrates an example of a panorama representation comprising several regions, based on a cubical projection, each region being associated with a projection of a surface and a panorama representation with one region further split into sub-regions or portions;
**Figure 3** illustrates a block diagram illustrating an example of the general principle of adaptive media streaming over HTTP;
**Figure 4** is a block diagram illustrating the main components of a DASH Media Presentation Description streaming manifest; and
**Figure 5** is a schematic block diagram of a computing device for implementation of one or more embodiments of the invention.

### DETAILED DESCRIPTION OF EMBODIMENTS OF THE INVENTION

According to particular embodiments, a streaming manifest or streaming playlist, for example the media presentation description (MPD) of the dynamic adaptive streaming over HTTP (DASH) protocol is used for signaling (i.e. providing) characteristics of media data representing a wide view of a scene, for example virtual reality media data such as panorama images or sets of stitchable images. These characteristics, that may comprise, for example, a type of projection used to create panorama images, the accessibility to parts of the panorama images, and quality and view direction indication that help streaming clients first to be informed that the media is not a classical media or video but offers some navigation possibilities and then to select data to be retrieved, can be signaled in newly added structure elements or descriptors in the case of DASH. The first point enables a client to set up and/or to select an appropriate user interface for interaction with the content.

These new descriptors can be inserted in a streaming manifest or streaming playlist when preparing the content for streaming at server end. In the case of DASH, new descriptors are inserted in the MPD file by a DASH server or a DASH packaging module to indicate (or signal) to a DASH client that a virtual reality media data representation of a wide view of a scene is provided and, for example, to characterize the panorama images contained within the virtual reality media data. Accordingly, these new descriptors may comprise the panorama projection type as well as the characteristics and parameters used with this panorama projection type to obtain the panorama images. Typically, they comprise the viewpoint and parameters to localize panorama regions, if any, inside of a panorama image. These new descriptors, called VR descriptors hereafter, may be structured elements like XML items and/or attributes or may be described with JSON (JavaScript Object Notation) or even in plain text format provided that keywords or comments are dedicated to convey these descriptors.

It may be recalled that DASH makes it possible to create an association between a compact description of the content(s) of a media presentation and the HTTP addresses (typically URLs). Such an association is described in a file called a manifest file or a description file. In the context of DASH, this manifest file is a file also called the MPD file (for *Media Presentation Description*).

When the MPD file is sent to the client, the description of each media content can be easily known by the client. By reading the manifest file, the client is aware of the kind of media contents proposed in the media presentation and is aware of the HTTP addresses for downloading the associated media contents. Therefore, it can decide which media content to download (via HTTP requests) and to play (decoding and play after reception of the media data segments).

In addition to the association mentioned above, the DASH standard makes it possible to split each media content into small periods of time called segments. There are initialization segments, for example at the beginning to set-up the media decoders, and media segments that convey the media data. The segments are not necessary physical file. They can be byte ranges into a single file, an ISOBMFF file for example. The time decomposition is added in the MPD file. Thus it describes the association between HTTP addresses (or URLs) and the compact description of each media content over a small period of time.

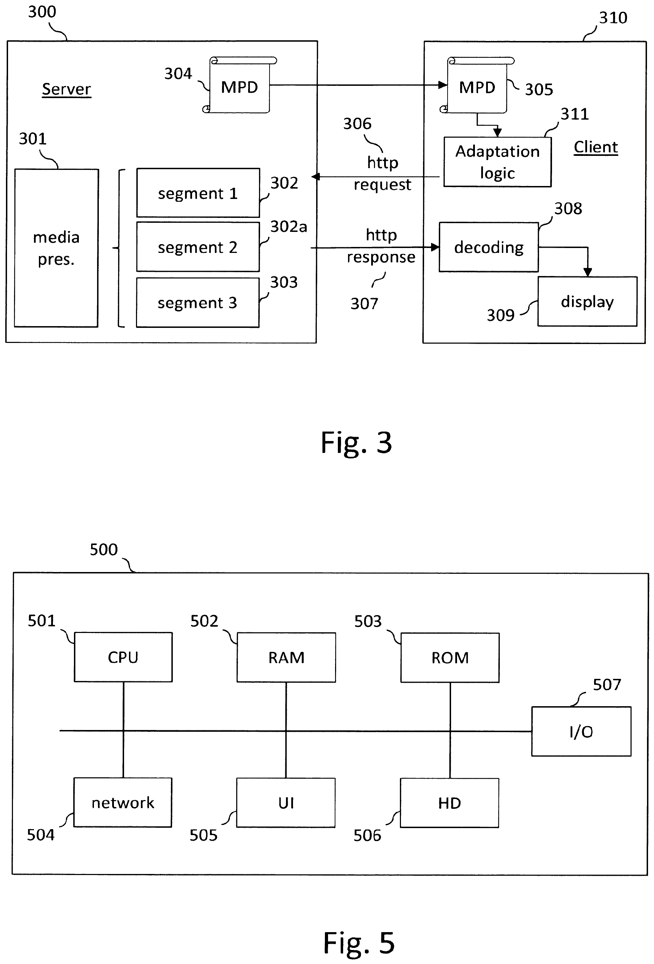

**Figure 3** illustrates a block diagram illustrating an example of the general principle of media streaming over HTTP. In a preferred embodiment, the DASH protocol is considered as the streaming protocol over HTTP.

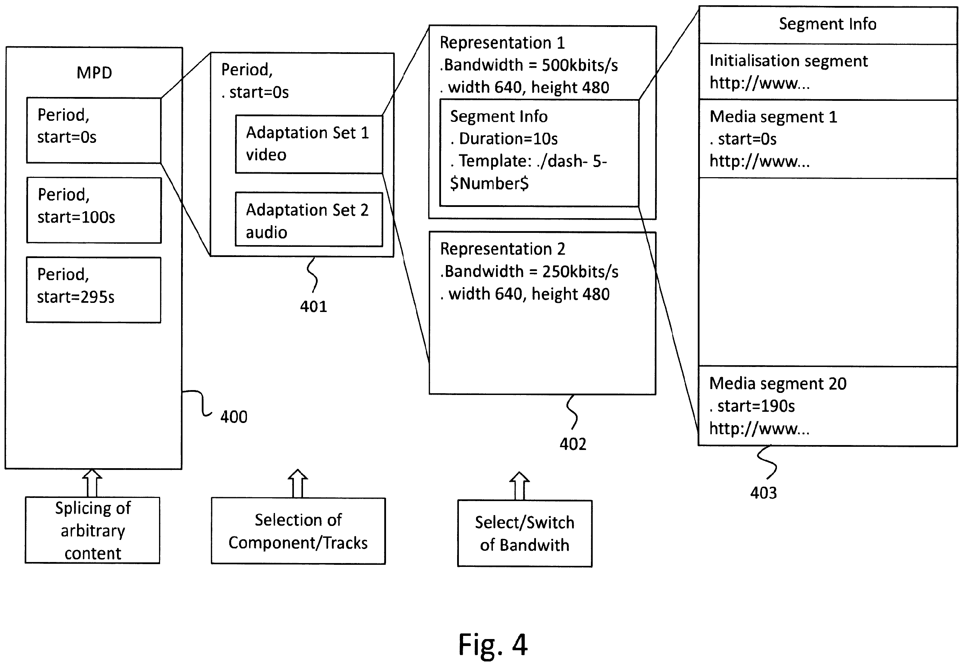

In addition, **Figure 4** illustrates, described in conjunction with Figure 3, the overall organisation of an MPD file.

As illustrated, a media server 300 contains different media presentations. A simplified example of media presentation 301 is illustrated. It contains here virtual reality media data such a temporal sequence of panorama images. This media presentation has been split, temporally and spatially, into small independent segments 302, 302a and 303 (or reference 403 in Figure 4). These segments can be addressed and downloaded independently. The downloading addresses of the media content are HTTP addresses (or URLs). There is one HTTP address associated with each segment of the virtual reality media content. They are set by the media server 300 for each one of these segments.

A manifest file 304 (or description file) reflects the organisation of the media presentation available on the media server in terms of HTTP addresses, versions of the content in terms of resolution, codec, bitrate, media type, etc.. It can be an XML document or even a plain text file like HTTP Live Streaming. For example, the DASH MPD and the streaming manifest for Smooth Streaming both use XML. It describes the content of the media segments e.g. type of media (audio, video, audio-video, text, metadata, etc.) as illustrated, for example with adaptation sets 401 in Figure 4, coding format, time duration of the segment. Moreover it associates an URL with each media content segment that is described.

The manifest file 304 is sent to a client 310. By reading the received manifest file 305, the client can know the association between segments of the different media content and the HTTP addresses designating the segments. It can also determine the alternate versions for a video (such as representations 402 in Figure 4), for example, or associated metadata to a media stream. Moreover, the manifest file 305 gives the information about the content (virtual reality media data in this example) of the media presentation. For instance, the information may include resolution and/or bit-rate. All the information provided in the streaming manifest or streaming playlist are handled by an adaptation logic module 311 that can determine which segments should be requested to the streaming server.

The client 310 can therefore emit HTTP requests 306 for downloading the segments that it wants, these segments being described in the received manifest file 305.

As a response, the server 300 sends the requested segments in an HTTP response 307. These segments can be decoded by the client 310 and displayed (steps 308 and 309).

It is noted that the server may consist in separate servers or devices, each performing one or more of the following steps:
- generation of the media content,
- encapsulation of the media stream in file format,
- generation of the streaming manifest or playlist file,
- transmission of the media presentation, and
- transmission of media content, most often as content segments.

The client may thus issue requests for the manifest to a first server, for example an application server and requests for the media content to one or more other servers, for example media servers or streaming servers. The server which transmits the media samples may be also different, for example if media is delivered through a CDN (Content Delivery Network).

**Tables 1a** and **1b** of the Appendix give two different examples of the use of the new VR descriptors in a media presentation description (MPD) for signaling the same projection associated with panorama images of virtual reality media data. The same information could be placed in other types of streaming manifest, only requiring adaptation to the syntax or language used for this manifest (XML, JSON, plain text, etc.).

As illustrated in table 1a, signaling of a virtual reality media data representation in a MPD may be done, for example, using either the *SupplementalProperty* DASH generic descriptor or the *EssentialProperty* DASH generic descriptor with a *@schemeIdURI* attribute that is set, for example, to the new value *"urn:mpeg:dash:VR:2016".* This value is just provided here as an example. The object is to have a reserved unique value (typically a URN in DASH MPD) in the *@schemeIdUri* to unambiguously identify the descriptor as a descriptor for virtual reality or omnidirectional media providing information on a panorama. Alternative embodiments consist in defining, instead of using generic DASH descriptors, an explicit descriptor as a reserved element to convey VR and/or omnidirectional information, for example a *<ProjectionInfo>* element, inheriting in the MPD schema from *DescriptorType,* that could be put directly at the MPD level if the manifest only offers VR content or in some adaptation sets, representation, or sub-representation level if the manifest offers both VR and non-VR content, this explicit descriptor being a child of the adaptation sets, representation, or sub-representation describing VR content. The example in table 1a is an example of an extension of the DASH generic descriptor *<SupplementalProperty>* with, on the one hand, a new *schemeldUri* value to indicate it is a VR descriptor and with, in the other hand, new element called *"panorama"* to convey a projection identifier, a projection type information (on a cylinder in the example) and a vertical field of view information expressed as two angle values between the reference point and respectively the top of the cylinder (+60° in the example) and the bottom of the cylinder (-60° in the example), thus providing a field of view of 120° in vertical dimension. Table 7a is an alternative of table 1a preferring new attributes for projection id, projection type and field of view information. Table 7b is another alternative where the *value* attribute is used instead of creating new attributes. It is to be noted that these variants would apply the same way if the *EssentialProperty* descriptor or an explicit descriptor is used. Finally, table 7c is the same example as in table 7b, except that the field of view value is expressed as two angle values 180° and 120° respectively providing horizontal field of view and vertical field of view (the angle seen from the reference point).

According to some embodiments where several alternative panoramas are described in the MPD, the existing *@value* attribute of *SupplementalProperty* and/or *EssentialProperty* descriptors may be used to refer to one of the several alternative panoramas addressed by a current representation or adaptation set (or possibly sub-representation).

This signaling is used preferably as a descriptor at the *adaptation set* level to indicate that the adaptation set contains media data related to panorama data, e.g. panorama image(s) or video(s). According to alternative embodiments, this descriptor can be set at the representation or sub-representation level. When a panorama is further split into panorama regions as illustrated in Figure 1c to provide access to portions, spatial areas, or sub-regions in the panorama region, the VR descriptors can be set in the representation or sub-representation describing the panorama region in terms of size, bandwidth, and corresponding segments to download.

In order to provide a backward compatibility for clients that cannot interpret VR descriptors, the use of a *SupplementalProperty* descriptor for signaling the VR descriptors may be more adapted than the use of an *EssentialProperty* descriptor. Indeed, when a panorama, a panorama region, or a panorama sub-region is declared in the manifest, for example a panorama region corresponding to one face of a projection onto a cube, the content author can let non VR-aware streaming clients select, download, and play this panorama, panorama region, or panorama sub-region as a classical 2D video. Conversely, when the capturing projection does not make it possible for a non VR aware client to play any of the panorama, panorama region, or panorama region, the VR descriptors are put in an *EssentialProperty* descriptor so that the descriptors plus the associated content (parent adaptation set, representation, or sub-representation) is ignored and can safely be remove from the MPD.

A *SupplementalProperty* descriptor or an *EssentialProperty* descriptor signaling a virtual reality media data representation may be referred to as *VR SupplementalProperty* or *VR EssentialProperty.*

According to particular embodiments, signaling the type of projection used in a panorama image can be done with a new element/attribute. For example, it can be signaled with the element/attribute *"projection_type='cube"'*, or *"projection_type='cubical"'* for signaling the use of the cubical projection or, as illustrated in table 1a of the Appendix, with *"type='cylindrical"',* or type="cylinder" for signaling the use of the cylindrical projection, projection onto a cylinder. It can also be signaled by using the existing @value attribute, for example "value='pyramid"' or "value='pyramidal"' for signaling the use of the pyramid projection or possibly, as illustrated in the media presentation description of table 1b, by using a new dedicated *@schemeIdURI* attribute value, for example one reserved or specific URN per projection type, such as *"urn:mpeg:dash:VR:cylinder:2016"* (for signaling the use of the cylindrical projection), that is also used to signal a VR media data representation (instead of generic *"urn:mpeg:dash:VR:2016"* that does not indicate the actual projection type in use). Having such specific URN in the VR descriptor may help streaming client at MPD parsing time to determine more quickly whether or not they are able to play a panorama, a panorama region, or even a panorama sub-region.

According to particular embodiments, the existing @value attribute of the generic DASH descriptors may be used to express parameters that are specific to the signaled projection type as a comma separated list of values (e.g. *"value="60, -60"'* in table 1a), or as new attributes specific to the dedicated *schemeIdUri* for VR descriptor (e.g. "top_pitch="60" bottom_pitch="-60") in table 1b). In this example, the specific attributes are the pitch angle values (expressed in degrees) corresponding to the projection of the top and to the projection of the bottom of a cylindrical projection. Additional attributes can also be provided to provide parameters such as on *min_yaw* (maximum angle to the left) and *max_yaw* (maximum angle to the right) angles as well as on roll minimum and maximum angle values, for example in degrees. It is noted that using other units for the angles is possible but that it requires an additional attribute to provide the angle unit, (for example *angle_unit="radian"*). This type of parameters may also be useful for other kinds of projection like squished_sphere for example.

The viewpoint orientation for the projection (i.e. the reference viewpoint) can be defined by a yaw value, a pitch value, and optionally a roll value that can be expressed, for example, in rotation degrees. For the sake of illustration, these values can be signaled by using new element/attribute(s) such as *"ref_vp='180,0"'* for respectively defining actual yaw and pitch values in a single attribute or in separate attributes like *"vp_yaw='180"'* for signaling only a yaw value. If one or several attributes are omitted, the missing value(s) can be replaced by the corresponding default viewpoint one(s) (e.g. *"0,0,0").*

Signaling the projection type enables a DASH client to select a *Representation,* an *AdaptationSet,* or a *SubRepresentation* as a function of the projection types that it can handle. The signaling of an absolute orientation enables a DASH client to select a *Representation,* an *AdaptationSet,* or a *SubRepresentation* according to a viewpoint requested by a user. For example, when the user moves the head or navigates in the panorama through a dedicated user interface, the adaptation logic of the client (reference 311 in Figure 3) can identify the most appropriate version of the content from the MPD (reference 305 in Figure 3).

According to particular embodiments, a panorama descriptor can use a projection identifier using, for example, an *@projection_id* attribute as illustrated in table 1b. This makes it possible to associate all the parameters (e.g. a viewpoint and specific parameters) of a projection with this identifier and to inform a client on alternative versions of panorama regions or of panorama sub-regions using the same projection. Accordingly, it makes it possible to avoid repeating the capturing projection type, only a reference to the projection and the related panorama representation is provided in the manifest.

Therefore, if the same projection identifier is used within at least two adaptation sets, all the parameters related to the projection associated with the projection identifier may be declared only once in one *AdaptationSet* and omitted in another *AdaptationSet* (or in another *Representation* or *SubRepresentation*) where they are assumed to be the same. If the parameters are duplicated in *AdaptationSets, Representations,* or *SubRepresentations* using the same projection and/or viewpoint, it is recommended to use the same values for the projection parameters and/or viewpoint parameters in all these *AdaptationSets, Representations,* or *SubRepresentations* so that a client can unambiguously associate them as parts of the same panorama..

Optionally, a panorama descriptor can also be associated with a panorama identifier using a *@panorama_id* attribute so as to distinguish between different panoramas versions if several panoramas are described in the MPD. In particular, two representations which share the same panorama identifier value reveals that these representations are alternatives to each other. Still optionally, a panorama descriptor can be also associated with a panorama image index using a *@panorama_image_id,* if several panorama images are used inside the same panorama. The latter applies in particular when the immersive environment is provided along a given navigation path in the wide view. Several panorama images are generated at several path locations.

As described above, a given panorama image may contain several regions which are specific to the projection type. Accordingly, information on each panorama region should be provided. This can be done by using a new panorama region descriptor.

According to embodiments, description of the panorama regions is performed using a *PanoramaRegion* element contained in a *Panorama* element of either a *VR SupplementalProperty* or a *VR EssentialProperty.* An alternative embodiment consists in declaring this descriptor for *PanoramaRegion* as a specific descriptor, i.e. as a specific MPD element dedicated to convey descriptive information on a panorama region, for example *<PanoramaRegion>* inheriting in the MPD schema from *DescriptorType* and declared either at the adaptation set, representation, or sub-representation levels.

According to embodiments, all the panorama regions are described in an *AdaptationSet,* a *Representation,* or a *SubRepresentation* containing the description of the corresponding panorama image. Alternatively, the panorama regions are described in an empty *AdaptationSet, Representation,* or *SubRepresentation* describing a panorama image but not containing any media segments of that panorama image. The purpose of such an *AdaptationSet, Representation,* or *SubRepresentation* is then to declare exhaustively the list of available regions so that other *AdaptationSet, Representation,* or *SubRepresentation* actually containing media segments can refer to it in order to obtain information on the available panorama regions.

Still according to embodiments, if there is no *AdaptationSet, Representation,* or *SubRepresentation* describing the full panorama image in the MPD, the panorama regions can still be described within each *AdaptationSet, Representation,* or *SubRepresentation* of the videos containing one (or more) panorama regions, as illustrated in Table 4a of the Appendix.

Still according to embodiments, the VR descriptors and panorama regions descriptors are described in an *AdaptationSet, Representation,* or *SubRepresentation* describing a metadata track, for example metadata using the omnidirectional media application format (OMAF). This requires that the content packagin step 141 in Figure 1a reflects the association declared between the OMAF track and one or more video tracks in the MPD manifest. As illustrated in table 8 of the Appendix, this can be done by declaring both *associationld* and *associationType* attributes in the representations describing the OMAF track in the MPD respectively pointing to the representation of the one or more video tracks in the MPD. The *associationType* attribute may take the 'cdsc' value to indicate that the metadata representation of the OMAF track in the MPD offers additional description content for one or more video representations declared in the MPD.

During the media packaging step 141, the server preferably checks the file format information for the media file to determine if some post-decoder requirement information is present, for example by examining if the sample entries of the video track to package for streaming are of type 'resv'. If it is the case, the media packaging module parses a scheme information box that may provide information in the capturing projection types used to build the panorama. If such information is present (as it is the case when one OMAF track is available) the media packaging module uses this information to set the value of the VR descriptor in an *AdaptationSet, Representation,* or *SubRepresentation* describing the panorama. Again, extracting this information and exposing it in the streaming manifest make it possible for streaming clients, through their adaptation logic, to quickly identify whether a video *AdaptationSet, Representation,* or *SubRepresentation* is candidate or not for download and play. In the case of the OMAF metadata track, it is less direct since a client has to follow the *associationld* of the OMAF Representation to find the *Representation* providing the description of the panorama images.

According to embodiments, the panorama region descriptor is signaled at the same level as the panorama description (adaptation set, representation, or sub-representation). Alternatively, the panorama region descriptor is signaled at the same level as the panorama region description (adaptation set, representation, or sub-representation). The first solution presents the advantage of enabling a client to determine each region size and the number of regions during the parsing of a single element (i.e. there is no need to parse each panorama region description). The second solution requires less MPD parsing operations if some panorama regions are not used by the client.

In the case of stereoscopic representations, the DASH multiple views scheme may be used directly to signal the role of each view with the *Role* descriptor applied to a *ContentComponent* element of type video or to an *AdaptationSet* element, if each view is contained in a different panorama image (i.e. in a different *AdaptationSet*). It may also be extended by allowing the Role descriptor to be applied to a *PanoramaRegion* to support the case where left eye and right eye representations are in two parts of the same image/video content. Alternatively, the *PanoramaRegion* may contain new optional attribute(s) to define stereo information (e.g. *"stereo='left'", "stereo='none"'* [default])

**Tables 2a, 2b, 2c,** and **2d** of the Appendix illustrate four AdaptationSet descriptors using VR descriptors.

According to the example given in table 2a, the spatial location of a region in the video described at the adaptation set level is signaled, in the panorama region descriptor, using four parameters expressed in pixels in the referential of the video of the panorama image. These parameters comprise the (x, y) coordinates of the top left corner of the region (in the panorama video) and the width and height of the region (or alternatively the x, y coordinates of the bottom right corner of the region). These parameters may be described in a new *@position* attribute of the *PanoramaRegion* element using a comma separated list of integer values as illustrated in table 2a (e.g. *"position='0,200,200,200*'"). According to embodiments, if no spatial location of the region is provided, it means that the video of the adaptation set, in which is declared the region, is totally covered by the region.

Optionally, a fifth parameter may be used to indicate a panorama image index if a specific panorama image is to be addressed (if the panorama contains multiple panorama images and no fifth parameter is provided, it means that all the panorama images are concerned).

Each panorama region descriptor is associated with a region type that depends on the projection type of the reference panorama image. It is specified by specific values for region identifiers (e.g. "front", "top", "right", etc.), as illustrated in table 2a, or by a pre-defined region index using numerical values, like for example the list of values proposed in OMAF.

According to embodiments, a PanoramaRegion descriptor can be declared as an element of a panorama descriptor (as illustrated in table 2a). Alternatively, a *PanoramaRegion* can be directly declared within either the *VR SupplementalProperty* or the *VR EssentialProperty* or any explicit descriptor. In such a case, the reference panorama image is identified by an attribute belonging to the *PanoramaRegion.*

As illustrated in table 2b, a panorama region descriptor may be associated with the reference panorama projection by using its identifier (e.g. *"projection_id='1*'") or, alternatively, by using the identifier of the panorama (if there are more than one panorama in the MPD) and the identifier of the panorama image (if there are more than one image for that panorama) (e.g. "panorama-id='1', panorama_image_id='0'"). Alternatively, if the *PanoramaRegion* descriptor is declared as a child element of a panorama, the projection identifier is not necessary. The panorama region then refers to its embedding Panorama, for example as illustrated in table 2a.

According to embodiments, if a *PanoramaRegion* descriptor is used but no AdaptationSet representation of the Panorama is available, the panorama projection type may be directly identified by an attribute belonging to the PanoramaRegion, as illustrated in table 2c. This is not required if a scheme dedicated to the projection is used as illustrated in table 2d.

Similarly, if *PanoramaRegion* descriptors are used in various *AdaptationSets, Representations,* or *SubRepresentations,* but no *AdaptationSet, Representation, or Sub*Representation describing the panorama is available, the *projection_id* is still used to indicate that the panorama regions are referring to the same panorama image as illustrated, for example, in tables 2c and 2d. This makes it possible to relate these panorama regions as pertaining to a same panorama (even if not available). All the descriptive information brought by the new descriptors shown in tables 2a, 2b, and 2c can also be conveyed in new attributes of the selected descriptor (either a DASH generic one or an explicit one), or in the existing *"value"* attribute as a list of concatenated values. For example, table 9a provides the same information as in table 2a but with a new attribute *"region_list"* for the panorama regions. An alternative would be to use as many DASH descriptor as the number of regions, placing the regions description information in the *"value"* attribute, so that descriptors cannot be considered equivalent, thus forcing a player to process all of them (and not only one in the set). Table 9b provides such an example.

The DASH standard introduces the ability to express spatial relationships among media content components in MPD either at the adaptation set or sub-representation level. It consists in using either *SupplementalProperty* or *EssentialProperty* descriptors with *@schemeIdURI* equal to *"urn:mpeg:dash:srd:2014".* The *@value* attribute consists of a comma separated list of values for SRD (*Spatial Relationship Description*) parameters comprising the following parameters:
- *source_id* provides the identifier of the source of the media content. The parameters (*object_x, object_y*, *object_width*, *object_height*) used in different SRD sharing the same value called "source_id value" within a Period may be compared to determine that two representations spatially relate to each other;
- *object_x*: provides the horizontal position, in the reference space defined by this SRD descriptor, of the top-left corner of the video described in the *AdaptationSets* or *SubRepresentations* using this descriptor;
- *object_y*: provides the vertical position, in the reference space defined by this SRD descriptor, of the top-left corner of the video described in the *AdaptationSets* or *SubRepresentations* using this descriptor;
- *object_width*: provides the width, in the reference space defined by this SRD descriptor, of the video described in the *AdaptationSets* or *SubRepresentations* using this descriptor;
- *object_height*: provides the height, in the reference space defined by this SRD descriptor, of the video described in the *AdaptationSets* or *SubRepresentations* using this descriptor;
- *total_width*: provides the maximum extent along the x-axis of the video described in the *AdaptationSets* or *SubRepresentations* having SRD with the same *source_id* value. When not present, this value is set to the *total_width* value of the SRD annotation having the same *source_id* value. For a given *source_id* value, at least one *total_width* value shall be specified;
- *total_height*: provides the maximum extent along the y-axis of the video described in the *AdaptationSets* or *SubRepresentations* having SRD with the same *source_id* value. When not present, this value is set to the *total_height* value of the SRD annotation having the same *source_id* value. For a given *source_id* value, at least one *total_height* value shall be specified;
- *spatial_set_id*: provides an identifier for a group of *AdaptationSets* or *SubRepresentations* that have the same *source_id* value. The *spatial_set_id* parameter can be used to indicate that a group of *AdaptationSets* or *SubRepresentations* form a group of non-overlapping or contiguous videos without gaps or are part of a same scalability layer;

The *object_x* and *object_y* parameters (respectively *object_width* and *object_height*) express 2D positions (respectively 2D sizes) of the associated *AdaptationSets* or *SubRepresentations* in the coordinate system associated with the source, identified by the *source_id* parameter. This coordinate system may use an arbitrary origin. According to particular embodiments, the x-axis is oriented from left to right and the y axis from top to bottom. All SRD sharing the same *source_id* value have the same origin and axes orientations.

The *total_widthand total_height* values define a reference space in this coordinate system. The values of the *object_x, object_y, object_width,* and *object_height* parameters are relative to the values of the *total_width* and *total_height* parameters. Positions (*object_x*, *object_y*) and sizes (*object_width*, *object_height*) of SRD sharing the same *source_id* value may be compared after taking into account the size of the reference space, i.e. after the *object_x* and *object_width* values are divided by the *total_width* value and the *object_y* and *object_height* values divided by the *total_height* value of their respective descriptors.

**Table 3** of the Appendix gives an example of SRD descriptor with a video composed of 4 tiles (AS1 to AS4) in a reference space with arbitrary units. For the sake of illustration, only the MPD description for tiles AS1 and AS2 is shown.

The first adaptation set corresponds to tile AS1. It is composed of one video representation with a resolution of 1920x1080 pixels. A SRD descriptor (using *SupplementalProperty* descriptor) specifies that this video is a tile with *source_id* equals 1 and that it is located at the top-left corner of the reference space (coordinates *object_x*=0 and *object_y*=0). The size of the video represents the half of the reference space in each direction (*object_width* and *object_height* cover 100 over the 200 arbitrary units for *total_width* and *total_height* of the reference space). It can be deduced from the SRD descriptor that the whole reference space indeed represents a 4k2k video (3840x2160 pixels).

From the SRD descriptor, it can be deduced that the second adaptation set corresponds to tile AS2. This SRD descriptor is introduced using, here, an *EssentialProperty* descriptor specifying that the tile pertains to the same reference space than the first adaptation set (same *source_id =* 1) and that it is located at midrange on x-axis (value 100 over 200) and on the base of the y-axis (value 0).

The difference between *SupplementalProperty* and *EssentialProperty* descriptors is on the way the parent element (*AdaptationSet, Representation,* or *SubRepresentation*) is handled by a client that does not understand the value of the *schemeIdURI* attribute, in the case of SRD: *"urn:mpeg:dash:srd:2014".* Indeed, in case of an *EssentialProperty* descriptor, if the client does not understand the *schemeldUri,* then it must ignore it as well as the parent element that contains the descriptor. In case of *SupplementalProperty,* the client is just expected to ignore the descriptor itself but it can still use the parent element.

Accordingly, when SRD descriptors are used in a MPD, it is recommended to rely on at least one *SupplementalProperty* descriptor for backward compatibility with clients that don't understand Spatial Relationship Description.

**Table 4** in the Appendix illustrates how a panorama descriptor and a panorama region descriptor may be combined with spatial relationship description (SRD) into a MPD. As illustrated, a panorama image (e.g. *<SupplementalProperty schemeIdUri="urn:mpeg:dash:srd:2014" value="1,0,0,2120,1080,2120,1080"*/*>*) or alternatively a panorama region (e.g. *<SupplementalProperty schemeIdUri="urn:mpeg:dash:srd:2014" value="2,0,0,1920,1080,1920,1080"*/*>*) can be divided in regions of interest (ROI). Accordingly, an SRD descriptor is used to specify the ROI in a panorama image (e.g. *<SupplementalProperty schemeIdUri="urn:mpeg:dash:srd:2014" value="1,200,0,1920,1080,2120,1080"*/*>*) or alternatively in a panorama region (e.g. *<EssentialProperty schemeIdUri="urn:mpeg:dash:srd:2014" value="2,0,0,960,540,1920,1080"*/*>*). It is to be noted that a VR descriptor does not impact or modify an SRD descriptor. Both descriptors are orthogonal and combine well to provide spatial access in to panorama regions or panorama sub-regions. Table 11 is an alternative description of panorama regions from a cube projection with normalized coordinates. The projection ID is implicitly the SRD *source_id.* Projection type information is provided through the VR descriptor.

**Table 5a** and **5b** in the Appendix provide alternative examples of use of VR descriptor with SRD.

As illustrated in table 5a, a nested SRD use is presented similar to the one presented in table 4. However, it does not comprise any declaration of regions inside the panorama. In this example, the *projection_id* is not used, the *source_id* of the SRD descriptor can be used instead to relate panorama regions to the panorama. In such an embodiment, the panorama is identified via the SRD parameters values when *object_width=total_width* and *object_height=total_height*, as for classical SRD. In this embodiment, the VR descriptor and classical SRD descriptor combine in order to provide spatial access to panorama regions (or portions or spatial parts) and also to associate the panorama with its panorama regions.

In the alternative embodiments illustrated in table 5b, the SRD scheme is extended by using a new *@shemeIdUri* value that is equal, for example, to *"urn:mpeg:dash:srd:2016",* so as to support VR content. In this embodiment, this new scheme can be used so that SRD descriptor handles both spatial relationship description and description of VR or omnidirectional media. The *@value* attribute keeps the same formatting/parameters as in 2014 SRD scheme, and is used to extract panorama regions of interest (that may or may not correspond to panorama regions or panorama sub-regions). The same projection type attribute as described for panorama is added to this new SRD scheme, for example as a new attribute. When this attribute is present in the MPD, it signals that the SRD is related to a panorama image, otherwise the SRD is related to classical 2D video. According to embodiments, no *@projection_id* attribute is added: the identifier of SRD (the first parameter of *@value*) is used instead to identify the panorama. A region is also signaled using the SRD 2016 scheme but using, for example, a new *@region_id* attribute, to specify which is the related region of the projection.

**Table 6** in the Appendix illustrates how to use a nested SRD identifier (e.g. 0.1 and 0.2) to extend the new SRD scheme so as to make possible a forward declaration of the regions inside a panorama and how it can be used with absolute coordinates in the panorama (e.g. *<SupplementalProperty schemeldUri= "urn:mpeg:dash:srd:2016" value="0.1,320,0,320,270,1920,1080"*/*>*) for a sub-region description or with coordinates relative to the panorama region (e.g. *<SupplementalProperty schemeIdUri= "urn:mpeg:dash:srd:20 16" value="0.2,0,0,320,270,640,540"*/*>*) for example.

Another possible extension of the SRD descriptor for virtual reality is to describe directly within SRD a projection ID and/or the type of projection and/or the position where to find a panorama region, as illustrated in the example of table 10a. Depending on the type of projection, the position should be assumed as pixels or normalized pixels (projection onto a cube or pyramid or none used) or as *yaw_start, yaw_end, pitch_start, pitch_end* angles for *squished_sphere,* cylinder as illustrated in the example of table 10b. Optionally, depending on the projection type, region identification information can be provided as last value: *"all"* for the panorama, *"front"* or *"top",* or *"bottom"* for a face of a cube.

Another alternative for the description of *PanoramaRegion* in terms of access depending on the user view or on the user navigation is directed to the use, instead of spatial coordinates (for example the *"position"* attribute of table 4 of the Appendix) with or without SRD, of a range value expressed as yaw, pitch and optionally roll angles values as illustrated in table 10c of the Appendix and describing a viewpoint as in Figure 1d (with respect to a reference point in the wide view, having *yaw*=0, *pitch*=0, and *roll*=0 angles). The current viewpoint can be given with at least 2 angles: yaw and pitch angles and optionally a roll angle giving the position of the center point of the gray area of Figure 1d, the width and height attributes of the Representation giving the width and height of the gray area in Figure 1d. This would avoid, for a client, mapping of angles resulting from head motion into spatial coordinates to use to retrieve the appropriate panorama region. Instead, the client could compute the cumulated angles from the reference viewpoint where it started displaying the media and directly match the angles values provided by this descriptor using *yaw, pitch,* and optionally *roll* angle values. These descriptors can be set by the media packaging unit 141 by parsing the values of the OMAF track when preparing the media for streaming.

**Figure 5** is a schematic block diagram of a computing device 500 for implementation of one or more embodiments of the invention. The computing device 500 may be a device such as a micro-computer, a workstation or a light portable device. The computing device 500 comprises a communication bus connected to:
- a central processing unit (CPU) 501, such as a microprocessor;
- a random access memory (RAM) 502 for storing the executable code of the method of embodiments of the invention as well as the registers adapted to record variables and parameters necessary for implementing the method for reading and writing the manifests and/or for encoding the video and/or for reading or generating data under a given file format, the memory capacity thereof can be expanded by an optional RAM connected to an expansion port for example;
- a read only memory (ROM) 503 for storing computer programs for implementing embodiments of the invention;
- a network interface 504 that is, in turn, typically connected to a communication network over which digital data to be processed are transmitted or received. The network interface 504 can be a single network interface, or composed of a set of different network interfaces (for instance wired and wireless interfaces, or different kinds of wired or wireless interfaces). Data are written to the network interface for transmission or are read from the network interface for reception under the control of the software application running in the CPU 501;
- a user interface (UI) 505 for receiving inputs from a user or to display information to a user;
- a hard disk (HD) 506;
- an I/O module 507 for receiving/sending data from/to external devices such as a video source or display.

The executable code may be stored either in read only memory 503, on the hard disk 506 or on a removable digital medium such as for example a disk. According to a variant, the executable code of the programs can be received by means of a communication network, via the network interface 504, in order to be stored in one of the storage means of the communication device 500, such as the hard disk 506, before being executed.

The central processing unit 501 is adapted to control and direct the execution of the instructions or portions of software code of the program or programs according to embodiments of the invention, which instructions are stored in one of the aforementioned storage means. After powering on, the CPU 501 is capable of executing instructions from main RAM memory 502 relating to a software application after those instructions have been loaded from the program ROM 503 or the hard-disc (HD) 506 for example. Such a software application, when executed by the CPU 501, causes the steps of the flowcharts shown in the previous figures to be performed.

In this embodiment, the apparatus is a programmable apparatus which uses software to implement the invention. However, alternatively, the present invention may be implemented in hardware (for example, in the form of an Application Specific Integrated Circuit or ASIC).

Although the present invention has been described hereinabove with reference to specific embodiments, the present invention is not limited to the specific embodiments, and modifications will be apparent to a person skilled in the art which lie within the scope of the present invention.

For example, the present invention may be embedded in a device like a camera, a smartphone, a head-mounted display or a tablet that acts as a remote controller for a TV or for multimedia display, for example to zoom in onto a particular region of interest. It can also be used from the same devices to have personalized browsing experience of a multimedia presentation by selecting specific areas of interest. Another usage from these devices and methods by a user is to share with other connected devices some selected sub-parts of his preferred videos. It can also be used with a smartphone or tablet to monitor what happens in a specific area of a building put under surveillance provided that the surveillance camera supports the method for providing data according to the invention.

Many further modifications and variations will suggest themselves to those versed in the art upon making reference to the foregoing illustrative embodiments, which are given by way of example only and which are not intended to limit the scope of the invention, that scope being determined solely by the appended claims. In particular the different features from different embodiments may be interchanged, where appropriate.

### APPENDIX

**Table 1a**

| |
|---|
| ```
 <?xml version="1.0" encoding="UTF-8"?>
 <MPD [...]>
 <Period [...]>
  <AdaptationSet [...]>
   <SupplementalProperty schemeIdUri="urn:mpeg:dash:VR:2016">
    <Panorama projection_id="0" type="cylindrical" value="60,-60">
     [...]
    </Panorama>
   </Supplemental Property>
   [...]
  </ AdaptationSet>
  [...]
 </Period>
 </MPD>
``` |

**Table 1b**

| |
|---|
| ```
 <?xml version="1.0" encoding="UTF-8"?>
 <MPD [...]>
 <Period [...]>
  <AdaptationSet [...]>
   <SupplementalProperty schemeIdUri="urn:mpeg:dash:VR:cylinder:2016">
    <Panorama projection_id="0" top_pitch="60" bottom_pitch="-60">
     [...]
    </Panorama>
   </Supplemental Property>
   [...]
  </ AdaptationSet>
  [...]
 </Period>
 </MPD>
``` |

**Table 2a**

| |
|---|
| ```
 <AdaptationSet [...]>
 <SupplementalProperty schemeIdUri="urn:mpeg:dash:VR:2016">
  <Panorama projection_id="0" type="cylindrical" [...]>
   <PanoramaRegion region_id="top" position="0,0,200,200"/>
   <PanoramaRegion region_id="bottom" position="0,200,200,200"/>
  </Panorama>
 </Supplemental Property>
 [...]
 </ AdaptationSet>
``` |

**Table 2b**

| |
|---|
| ```
 <AdaptationSet [...]>
 <SupplementalProperty schemeIdUri="urn:mpeg:dash:VR:2016">
  <Panorama projection_id="0" type="cylindrical" [...]/>
  <PanoramaRegion region_id="top" projection_id="0"/>
 </Supplemental Property>
 [...]
 </ AdaptationSet>
``` |

**Table 2c**

| |
|---|
| ```
 <AdaptationSet [...]>
 <SupplementalProperty schemeIdUri="urn:mpeg:dash:VR:2016">
  <PanoramaRegion region_id="top" projection_id="0" type="cylindrical"/>
 </Supplemental Property>
 [...]
 </ AdaptationSet>
``` |

**Table 2d**

| |
|---|
| ```
 <AdaptationSet [...]>
 <SupplementalProperty schemeIdUri="urn:mpeg:dash:VR:cylinder:2016">
  <PanoramaRegion region_id="top" projection_id="0"/>
 </Supplemental Property>
 [...]
 </ AdaptationSet>
``` |

**Table 3**

| |
|---|
| ```
 <?xml version="1.0" encoding="UTF-8"?>
 <MPD ...]>
 <Period ... > <!-- 4 tiles -->
  <!-- Tile AS1 -->
  <AdaptationSet [...]>
    <SupplementalProperty schemeIdUri="urn:mpeg:dash:srd:2014" value="1, 0, 0,
    100, 100, 200, 200"/>
    <Representation id="1 " bandwidth="5000000" width="1920" height="1080">
      <BaseURL>til 1.mp4</BaseURL>
    </Representation>
  </ AdaptationSet>
  <!-- Tile AS2 -->
  <AdaptationSet [...]>
    <EssentialProperty
    schemeIdUri="urn:mpeg:dash:srd:2014" value="1, 100, 0, 100, 100"/>
    <Representation id="2" bandwidth="5000000" width="1920" height="1080">
      <BaseURL>tile2.mp4</BaseURL>
    </Representation>
  </ AdaptationSet>
  <!-- Tile AS3 --> ...
  <!-- Tile AS4 --> ...
 </Period>
 </MPD>
``` |

**Table 4**

| |
|---|
| ```
 [...]
 <AdaptationSet [...]>
 <SupplementalProperty schemeIdUri="urn:mpeg:dash:VR:2016">
  <Panorama projection_id="0" type="cylindrical" [...]>
   <PanoramaRegion region_id="top" position="0,0,200,200"/>
   <PanoramaRegion region_id="bottom" position="0,200,200,200"/>
   <PanoramaRegion region_id="side" position="200,0,1920,1080"/>
  </Panorama>
 </Supplemental Property>
``` |
| ```
 <SupplementalProperty schemeIdUri="urn:mpeg:dash:srd:2014"
 value="1,0,0,2120,1080,2120,1080"/>
 [...]
 </ AdaptationSet>
 <AdaptationSet [...]>
 <EssentialProperty schemeIdUri="urn:mpeg:dash:VR:2016">
  <PanoramaRegion projection_id="0" region_id="side"/>
 </EssentialProperty>
 <SupplementalProperty schemeIdUri="urn:mpeg:dash:srd:2014"
 value="1 ,200,0,1920,1080,2120,1080"/>
 <SupplementalProperty schemeIdUri="urn:mpeg:dash:srd:2014"
 value="2,0,0, 1920, 1080,1920,1080"/>
 [...]
 </ AdaptationSet>
 <AdaptationSet [...]>
 <EssentialProperty schemeIdUri="urn:mpeg:dash:VR:2016">
  <PanoramaRegion projection_id="0" region_id="side"/>
 </Essenetial Property>
 <EssentialProperty schemeIdUri="urn:mpeg:dash:srd:2014"
 value="2,0,0,960,540, 1920, 1080"/>
 [...]
 </ AdaptationSet>
 [...]
``` |

**Table 5a**

| |
|---|
| ```
 [...]
 <AdaptationSet [...]>
 <SupplementalProperty schemeIdUri="urn:mpeg:dash:VR:2016" value="cube" />
 <SupplementalProperty
 schemeIdUri="urn:mpeg:dash:srd:2014" value="0,0,0,1920,1080,1920,1080" />
 [...]
 </ AdaptationSet>
 <AdaptationSet [...]>
 <SupplementalProperty schemeIdUri="urn:mpeg:dash:VR:2016" region_id="front"/>
``` |
| ```
 <SupplementalProperty
 schemeIdUri="urn:mpeg:dash:srd:2014" value="0,0,0,640,540,1920,1080" />
 <SupplementalProperty
 schemeIdUri="urn:mpeg:dash:srd:2014" value="1,0,0,640,540,640,540" />
 [...]
 </ AdaptationSet>
 <AdaptationSet [...]>
 <SupplementalProperty schemeIdUri="urn:mpeg:dash:VR:2016" region_id="front"/>
 <SupplementalProperty
 schemeIdUri="urn:mpeg:dash:srd:2014" value="1,320,0,320,270,640,540"/>
 [...]
 </ AdaptationSet>
 [...]
``` |

**Table 5b**

| |
|---|
| ```
 [...]
 <AdaptationSet [...]>
 <SupplementalProperty
 schemeIdUri="urn:mpeg:dash:srd:2016" value="0,0,0,1920,1080,1920,1080"
 type="cube"/>
 [...]
 </ AdaptationSet>
 <AdaptationSet [...]>
 <SupplementalProperty
 schemeIdUri="urn:mpeg:dash:srd:2016" value="0,0,0,640,540,1920,1080" />
 <SupplementalProperty
 schemeIdUri="urn:mpeg:dash:srd:2016" value="1,0,0,640,540,640,540"
 region_id="front"/>
 [...]
 </ AdaptationSet>
 <AdaptationSet [...]>
 <SupplementalProperty
 schemeIdUri="urn:mpeg:dash:srd:2016" value="1,320,0,320,270,640,540"/>
 [...]
 </ AdaptationSet>
``` |
| ```
 [...] 
``` |

**Table 6**

| |
|---|
| ```
 [...]
 <AdaptationSet [...]>
 <SupplementalProperty
 schemeIdUri="urn:mpeg:dash:srd:2016" value="0,0,0,1920,1080,1920,1080"
 type="cube"/>
 <SupplementalProperty
 schemeIdUri="urn:mpeg:dash:srd:2016" value="0.1,0,0,640,540,1920,1080"
 region_id="front"/>
 <SupplementalProperty
 schemeIdUri="urn:mpeg:dash:srd:2016" value="0.2,0,540,640,540,1920,1080"
 region_id="bottom"/>
 [...]
 </ AdaptationSet>
 <AdaptationSet [...]>
 <SupplementalProperty
 schemeIdUri="urn:mpeg:dash:srd:2016" value="0.1,320,0,320,270,1920,1080"/>
 [...]
 </ AdaptationSet>
 <AdaptationSet [...]>
 <SupplementalProperty
 schemeIdUri="urn:mpeg:dash:srd:2016" value="0.2,0,0,320,270,640,540"/>
 [...]
 </ AdaptationSet>
 [...]
``` |

**Table 7a**

| |
|---|
| ```
 <?xml version="1.0" encoding="UTF-8"?>
 <MPD [...]>
 <Period [...]>
  <AdaptationSet [...]>
   <SupplementalProperty schemeIdUri="urn:mpeg:dash:VR:2016" projection_id="0"
   type="cylindrical" value="60,-60" />
``` |
| ```
    <Representation ....> ... </Representation>
  </ AdaptationSet>
  [...]
 </Period>
 </MPD>
``` |

**Table 7b**

| |
|---|
| ```
 <?xml version="1.0" encoding="UTF-8"?>
 <MPD [...]>
 <Period [...]>
  <AdaptationSet [...]>
   <SupplementalProperty schemeIdUri="urn:mpeg:dash:VR:2016" value="0,
   cylindrical, 60, -60" />
    <Representation ....> ... </Representation>
  </ AdaptationSet>
  [...]
 </Period>
 </MPD>
``` |

**Table 7c**

| |
|---|
| ```
 <?xml version="1.0" encoding="UTF-8"?>
 <MPD [...]>
 <Period [...]>
  <AdaptationSet [...]>
   <SupplementalProperty schemeIdUri="urn:mpeg:dash:VR:2016" value="0,
   cylindrical, 180, 120" />
    <Representation ....> ... </Representation>
  </ AdaptationSet>
  [...]
 </Period>
 </MPD>
``` |

**Table 8**

| |
|---|
| ```
<MPD...>
``` |
| ```
 <AdaptationSet mimeType="video/mp4"... >
 <Representation id="1" ... > ... </Representation>
 </ AdaptationSet>
 <AdaptationSet mimeType="registered mimeType for OMAF"... >
 <SupplementalProperty schemeIdUri="urn:mpeg:dash:VR:2016" value="0, cube" />
 <Representation id="2" associationld="1" associationType="cdsc"... >
 </Representation>
 </ AdaptationSet>
 [...]
 </MPD>
``` |

**Table 9a**

| |
|---|
| ```
 <MPD ...>
 <AdaptationSet [...]>
 <SupplementalProperty schemeIdUri="urn:mpeg:dash:VR:2016" projection_id="0"
 type="cylindrical" region_list="top, 0, 0, 200, 200; bottom, 0, 200, 200, 200" />
 [...]
 </ AdaptationSet>
 [...]
 </MPD>
``` |

**Table 9b**

| |
|---|
| ```
 <MPD>
 <AdaptationSet [...]>
 <SupplementalProperty schemeIdUri="urn:mpeg:dash:VR:2016" projection_id="0"
 type="cylindrical" value="top, 0, 0, 200, 200" />
 <SupplementalProperty schemeIdUri="urn:mpeg:dash:VR:2016" projection_id="0"
 type="cylindrical" value="bottom, 0, 200, 200, 200" />
 [...]
 </ AdaptationSet>
 </MPD>
``` |

**Table 10a**

| |
|---|
| ```
<MPD>
``` |
| ```
 <AdaptationSet [...]>
 <SupplementalProperty schemeIdUri="urn:mpeg:srd-VR:2016" value="0, cube, 0, 0,
 200, 200, 200, 200, all" />
 [...]
 </ AdaptationSet>
 <AdaptationSet [...]>
 <SupplementalProperty schemeIdUri="urn:mpeg:srd-VR:2016" value="0, cube, 20,
 20, 100, 100, top" />
 [...]
 </ AdaptationSet>
 </MPD>
``` |

**Table 10b**

| |
|---|
| ```
 <MPD>
 <AdaptationSet [...]>
 <SupplementalProperty schemeIdUri="urn:mpeg:srd-VR:2016" value="0, cylinder, -
 180, 180, 90, -90, 360, 120" />
 [...]
 </ AdaptationSet>
 <AdaptationSet [...]>
 <SupplementalProperty schemeIdUri="urn:mpeg:srd-VR:2016" value="0, cylinder, -
 90, 90, 45, -45, " />
 [...]
 </ AdaptationSet>
 </MPD>
``` |

**Table 10c**

| |
|---|
| ```
 <MPD>
 <AdaptationSet [...]>
 <SupplementalProperty schemeIdUri="urn:mpeg:srd:2016" value="0, yaw, pitch, roll"
 />
 <Representation width="1920" height="1080"...> ... </Representation>
 [...]
 </ AdaptationSet>
 </MPD>
``` |

**Table 11**

| |
|---|
| ```
 <MPD...>
 <AdaptationSet [...]>
 <!-- Full panorama with projection type indication -->
 <SupplementalProperty schemeIdUri="urn:mpeg:dash:VR:2016" value="cube" />
 <SupplementalProperty schemeIdUri="urn:mpeg:dash:srd:2014" value="0, 0, 0, 5, 4,
 5, 4" />
 <Represention [...]>
 </Representation>
 </ AdaptationSet>
 <AdaptationSet [...]>
 <!-- Panorama region (top) -->
 <SupplementalProperty schemeIdUri="urn:mpeg:dash:VR:2016" value="cube" />
 <SupplementalProperty schemeIdUri="urn:mpeg:dash:srd:2014" value="0, 0, 0, 2, 1"
 />
 <Represention [...]>
 </Representation>
 </ AdaptationSet>
 <AdaptationSet [...]>
 <!-- Panorama region (front) -->
 <SupplementalProperty schemeIdUri="urn:mpeg:dash:VR:2016" value="cube" />
 <SupplementalProperty schemeIdUri="urn:mpeg:dash:srd:2014" value="0, 1, 1, 2, 2
 "/>
 [...]
 </ AdaptationSet>
 </MPD>
``` |

## Claims

1. A method for receiving media data complying with an omnidirectional media format, the method comprising:
receiving, from a server, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
sending, to the server, at least one request message to request at least one segment of media data by using at least one of the uniform resource identifiers of the media presentation description, the requested at least one segment being selected as a function of the descriptors; and
receiving, from the server, the at least one segment of media data according to the at least one request message.

2. The method according to claim 1, wherein a type represented by the projection type information includes at least one of a cubical projection, cylindrical projection, and pyramid projection.

3. A method for providing media data complying with an omnidirectional media format, the method comprising:
sending, to a client, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
receiving, from the client, at least one request message to request at least one segment of media data based on at least one of the uniform resource identifiers of the media data description, the requested at least one segment being selected as a function of the descriptors; and
providing, to the client, the at least one segment of media data according to the at least one request message.

4. The method according to claim 3, wherein a type represented by the projection type information includes at least one of a cubical projection, cylindrical projection, and pyramid projection.

5. The method of claim 1 or claim 3, wherein the media data complying with the omnidirectional media format comprise images, at least one of the images being a panorama image, the panorama image comprising a single panorama region or a plurality of panorama regions, or being a set of different panorama regions.

6. A client device for receiving media data complying with an omnidirectional media format, the client device comprising:
a hardware processor; and
a memory storing one or more programs configured to be executed by the hardware processor, the one or more programs including instructions for:
receiving , from a server, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
sending, to the server, at least one request message to request at least one segment of media data by using at least one of the uniform resource identifiers of the media presentation description, the requested at least one segment being selected as a function of the descriptors; and
receiving, from the server, the at least one segment of media data according to the at least one request message.

7. A server device for providing media data complying with an omnidirectional media format, the server device comprising:
a hardware processor; and
a memory storing one or more programs configured to be executed by the hardware processor, the one or more programs including instructions for:
sending, to a client, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
receiving, from the client, at least one request message to request at least one segment of media data based on at least one of the uniform resource identifiers of the media presentation description, the requested at least one segment being selected as a function of the descriptors; and
providing, to the client, the at least one segment of media data according to the at least one request message.

8. The device according to claim 6 or claim 7, wherein a type represented by the projection type information includes at least one of a cubical projection, cylindrical projection, and pyramid projection.

9. A non-transitory computer-readable storage medium storing a program for causing a computer to execute a method comprising:
receiving, from a server, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
sending, to the server, at least one request message to request at least one segment of media data by using at least one of the uniform resource identifiers of the media presentation description, the requested at least one segment being selected as a function of the descriptors; and
receiving, from the server, the at least one segment of media data according to the at least one request message.

10. A non-transitory computer-readable storage medium storing a program for causing a computer to execute a method comprising:
sending, to a client, a media presentation description complying with the MPEG-DASH standard and including (i) a uniform resource identifier of each of one or more segments of media data, (ii) media information describing each of the one or more segments of media data, and (iii) EssentialProperty or SupplementalProperty descriptors, wherein at least one descriptor comprises a '@schemeIdUri' attribute and includes projection type information representing a type of projection of the media data complying with the omnidirectional media format, the '@schemeIdUri' attribute signalling that the media data are omnidirectional media data, and wherein at least another descriptor comprises a '@schemeIdUri' attribute providing spatial relationship description (SRD) of the media data,
receiving, from the client, at least one request message to request at least a segment of media data based on at least one of the uniform resource identifier of the media presentation description, the requested at least one segment being selected as a function of the descriptors; and
providing, to the client, the at least one segment of media data according to the at least one request message.

11. The medium according to claim 9 or claim 10, wherein a type represented by the projection type information includes at least one of a cubical projection, cylindrical projection, and pyramid projection.

## Patentansprüche

1. Verfahren zum Empfangen von ein omnidirektionales Medienformat erfüllenden Mediendaten, wobei das Verfahren umfasst:
Empfangen einer den MPEG-DASH-Standard erfüllenden Medienpräsentationsbeschreibung von einem Server, mit (i) einem einheitlichen Ressourcenbezeichner von jedem von einem oder mehreren Segmenten von Mediendaten, (ii) Medieninformationen, die jedes von dem einen oder mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
Senden von zumindest einer Anforderungsnachricht an den Server, um zumindest ein Segment von Mediendaten durch Verwendung von durch Verwendung von zumindest einem der einheitlichen Ressourcenbezeichner der Medienpräsentationsbeschreibung anzufordern, wobei das angeforderte zumindest eine Segment als eine Funktion der Deskriptoren ausgewählt wird; und
Empfangen des zumindest einen Segments von Mediendaten von dem Server gemäß der zumindest einen Anforderungsnachricht.

2. Verfahren nach Anspruch 1, wobei eine durch die Projektionsartinformationen repräsentierte Art zumindest eine kubische Projektion, eine zylindrische Projektion oder eine Pyramidenprojektion umfasst.

3. Verfahren zum Bereitstellen von ein omnidirektionales Medienformat erfüllenden Mediendaten, wobei das Verfahren umfasst:
Senden einer Medienpräsentationsbeschreibung an einen den MPEG-DASH-Standard erfüllenden Client, mit (i) einem einheitlichen Ressourcenbezeichner für jedes von einem oder mehreren Segmenten von Mediendaten, (ii) Medieninformationen, die jedes von dem einen oder mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
Empfangen zumindest einer Anforderungsnachricht von dem Client, um zumindest ein Segment von Mediendaten auf der Grundlage von zumindest einem der einheitlichen Ressourcenbezeichner der Mediendatenbeschreibung anzufordern, wobei das angeforderte zumindest eine Segment als eine Funktion der Deskriptoren ausgewählt wird; und
Bereitstellen des zumindest einen Segments von Mediendaten an den Client gemäß der zumindest einen Anforderungsnachricht.

4. Verfahren nach Anspruch 3, wobei eine durch die Projektionsartinformationen repräsentierte Art zumindest eine kubische Projektion, eine zylindrische Projektion oder eine Pyramidenprojektion umfasst.

5. Verfahren nach Anspruch 1 oder Anspruch 3, wobei die ein omnidirektionales Medienformat erfüllenden Mediendaten Bilder umfassen, wobei zumindest eines der Bilder ein Panoramabild ist, wobei das Panoramabild ein einzelnes Panoramagebiet oder eine Vielzahl von Panoramagebieten umfasst oder ein Satz von verschiedenen Panoramagebieten ist.

6. Clientvorrichtung zum Empfangen von ein omnidirektionales Medienformat erfüllenden Mediendaten, wobei die Clientvorrichtung umfasst:
eine Hardware-Verarbeitungseinrichtung; und
einen Speicher, der ein oder mehrere Programme speichert, das/die derart eingerichtet ist/sind, dass es/sie von der Hardware-Verarbeitungseinrichtung ausgeführt werden kann/können, wobei das eine oder die mehreren Programme Anweisungen enthalten, für:
ein Empfangen einer den MPEG-DASH-Standard erfüllenden Medienpräsentationsbeschreibung von einem Server, mit (i) einem einheitlichen Ressourcenbezeichner für jedes von einem oder mehreren Segmenten von Mediendaten, (ii) Medieninformationen, die jedes von dem einen oder mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
ein Senden von zumindest einer Anforderungsnachricht an den Server, um zumindest ein Segment von Mediendaten durch Verwendung von zumindest einem der einheitlichen Ressourcenbezeichner der Medienpräsentationsbeschreibung anzufordern, wobei das angeforderte zumindest eine Segment als eine Funktion der Deskriptoren ausgewählt wird; und
ein Empfangen des zumindest einen Segments von Mediendaten von dem Server gemäß der zumindest einen Anforderungsnachricht.

7. Servervorrichtung zum Bereitstellen von ein omnidirektionales Medienformat erfüllenden Mediendaten, wobei die Servervorrichtung umfasst:
einer Hardware-Verarbeitungseinrichtung; und
einen Speicher, der ein oder mehrere Programme speichert, das/die derart eingerichtet ist/sind, dass es/sie von der Hardware-Verarbeitungseinrichtung ausgeführt werden kann/können, wobei das eine oder die mehreren Programme Anweisungen enthält/enthalten, für:
ein Senden einer den MPEG-DASH-Standard erfüllenden Medienpräsentationsbeschreibung an einen Client, mit (i) einem einheitlichen Ressourcenbezeichner für jedes von einem oder mehreren Segmenten von Mediendaten, (ii) Medieninformationen, die jedes von dem einen oder mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
ein Empfangen zumindest einer Anforderungsnachricht von dem Client, um zumindest ein Segment von Mediendaten auf der Grundlage von zumindest einem der einheitlichen Ressourcenbezeichner der Medienpräsentationsbeschreibung anzufordern, wobei das angeforderte zumindest eine Segment als eine Funktion der Deskriptoren ausgewählt wird; und
ein Bereitstellen des zumindest einen Segments von Mediendaten an den Client gemäß der zumindest einen Anforderungsnachricht.

8. Vorrichtung nach Anspruch 6 oder Anspruch 7, wobei eine durch die Projektionsartinformationen repräsentierte Art zumindest eine kubische Projektion, eine zylindrische Projektion oder eine Pyramidenprojektion umfasst.

9. Nichtflüchtiges computerlesbares Speichermedium, das ein Programm zur Veranlassung eines Computers speichert, ein Verfahren auszuführen, mit:
Empfangen einer den MPEG-DASH-Standard erfüllenden Medienpräsentationsbeschreibung von einem Server, mit (i) einem einheitlichen Ressourcenbezeichner für jedes von einem oder mehreren Segmenten von Mediendaten, (ii) Medieninformationen, die jedes von dem einen oder den mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
Senden von zumindest einer Anforderungsnachricht an den Server, um zumindest ein Segment von Mediendaten durch Verwendung von zumindest einem der einheitlichen Ressourcenbezeichner der Medienpräsentationsbeschreibung anzufordern, wobei das angeforderte zumindest eine Segment als eine Funktion der Deskriptoren ausgewählt wird; und
Empfangen des zumindest einen Segments von Mediendaten von dem Server gemäß der zumindest einen Anforderungsnachricht.

10. Nichtflüchtiges computerlesbares Speichermedium, das ein Programm zur Veranlassung eines Computers speichert, ein Verfahren auszuführen, mit:
Senden einer den MPEG-DASH-Standard erfüllenden Medienpräsentationsbeschreibung an einen Client, mit (i) einem einheitlichen Ressourcenbezeichner für jedes von einem oder mehreren Segmenten von Mediendaten, (ii) Medieninformationen, die jedes von dem einen oder mehreren Segmenten von Mediendaten beschreiben, und (iii) EssentialProperty- oder SupplementalProperty-Deskriptoren, wobei zumindest ein Deskriptor ein '@schemeIdUri'-Attribut umfasst und Projektionsartinformationen enthält, die eine Art einer Projektion der das omnidirektionale Medienformat erfüllenden Mediendaten repräsentieren, wobei das '@schemeIdUri'-Attribut signalisiert, dass die Mediendaten omnidirektionale Mediendaten sind, und wobei zumindest ein anderer Deskriptor ein '@schemeIdUri'-Attribut umfasst, das eine Beschreibung einer räumlichen Beziehung (SRD) der Mediendaten bereitstellt,
Empfangen von zumindest einer Anforderungsnachricht von dem Client, um zumindest ein Segment von Mediendaten anzufordern, auf der Grundlage von zumindest einem des einheitlichen Ressourcenbezeichners der Medienpräsentationsbeschreibung, wobei das angeforderte zumindest eine Segment als eine Funktion der Deskriptoren ausgewählt wird; und
Bereitstellen des zumindest einen Segments von Mediendaten an den Client gemäß der zumindest einen Anforderungsnachricht.

11. Medium nach Anspruch 9 oder Anspruch 10, wobei eine durch die Projektionsartinformationen repräsentierte Art zumindest eine kubische Projektion, eine zylindrische Projektion oder eine Pyramidenprojektion umfasst.

## Revendications

1. Procédé pour recevoir des données multimédia conformes à un format multimédia omnidirectionnel, le procédé comprenant les étapes consistant à :
recevoir, à partir d'un serveur, une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
envoyer au serveur au moins un message de demande pour demander au moins un segment de données multimédia en utilisant au moins l'un des identifiants de ressource uniformes de la description de présentation multimédia, l'au moins un segment demandé étant sélectionné en fonction des descripteurs ; et
recevoir, à partir du serveur, l'au moins un segment de données multimédia selon l'au moins un message de demande.

2. Procédé selon la revendication 1, dans lequel un type représenté par les informations de type de projection comporte au moins l'un parmi une projection cubique, une projection cylindrique, et une projection pyramidale.

3. Procédé pour fournir des données multimédia conformes à un format multimédia omnidirectionnel, le procédé comprenant les étapes consistant à :
envoyer à un client une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
recevoir, en provenance du client, au moins un message de demande pour demander au moins un segment de données multimédia sur la base d'au moins l'un des identifiants de ressource uniformes de la description de données multimédia, l'au moins un segment demandé étant sélectionné en fonction des descripteurs ; et
fournir au client l'au moins un segment de données multimédia selon l'au moins un message de demande.

4. Procédé selon la revendication 3, dans lequel un type représenté par les informations de type de projection comporte au moins l'un parmi une projection cubique, une projection cylindrique, et une projection pyramidale.

5. Procédé de la revendication 1 ou de la revendication 3, dans lequel les données multimédia conformes au format multimédia omnidirectionnel comprennent des images, au moins l'une des images étant une image panoramique, l'image panoramique comprenant une seule région panoramique ou une pluralité de régions panoramiques, ou étant un ensemble de différentes régions panoramiques.

6. Dispositif client pour recevoir des données multimédia conformes à un format multimédia omnidirectionnel, le dispositif client comprenant :
un processeur matériel ; et
une mémoire stockant un ou plusieurs programmes configurés pour être exécutés par le processeur matériel, les un ou plusieurs programmes comportant des instructions pour :
recevoir , à partir d'un serveur, une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
envoyer au serveur au moins un message de demande pour demander au moins un segment de données multimédia en utilisant au moins l'un des identifiants de ressource uniformes de la description de présentation multimédia, l'au moins un segment demandé étant sélectionné en fonction des descripteurs ; et
recevoir, à partir du serveur, l'au moins un segment de données multimédia selon l'au moins un message de demande.

7. Dispositif de serveur pour fournir des données multimédia conformes à un format multimédia omnidirectionnel, le dispositif de serveur comprenant :
un processeur matériel ; et
une mémoire stockant un ou plusieurs programmes configurés pour être exécutés par le processeur matériel, les un ou plusieurs programmes comportant des instructions pour :
envoyer, à un client, une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
recevoir, en provenance du client, au moins un message de demande pour demander au moins un segment de données multimédia sur la base d'au moins l'un des identifiants de ressource uniformes de la description de présentation multimédia, l'au moins un segment demandé étant sélectionné en fonction des descripteurs ; et
fournir au client l'au moins un segment de données multimédia selon l'au moins un message de demande.

8. Dispositif selon la revendication 6 ou la revendication 7, dans lequel un type représenté par les informations de type de projection comporte au moins l'un parmi une projection cubique, une projection cylindrique, et une projection pyramidale.

9. Support de stockage lisible par ordinateur non transitoire stockant un programme pour amener un ordinateur à exécuter un procédé comprenant les étapes consistant à :
recevoir, à partir d'un serveur, une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
envoyer au serveur au moins un message de demande pour demander au moins un segment de données multimédia en utilisant au moins l'un des identifiants de ressource uniformes de la description de présentation multimédia, l'au moins un segment demandé étant sélectionné en fonction des descripteurs ; et
recevoir, à partir du serveur, l'au moins un segment de données multimédia selon l'au moins un message de demande.

10. Support de stockage lisible par ordinateur non transitoire stockant un programme pour amener un ordinateur à exécuter un procédé comprenant les étapes consistant à :
envoyer à un client une description de présentation multimédia conforme à la norme MPEG-DASH et comportant (i) un identifiant de ressource uniforme de chacun d'un ou plusieurs segments de données multimédia, (ii) des informations multimédia décrivant chacun des un ou plusieurs segments de données multimédia, et (iii) des descripteurs EssentialProperty ou SupplementalProperty, dans lequel au moins un descripteur comprend un attribut "@schemeldUri" et comporte des informations de type de projection représentant un type de projection des données multimédia conformes au format multimédia omnidirectionnel, l'attribut "@schemeldUri" signalant que les données multimédia sont des données multimédia omnidirectionnelles, et dans lequel au moins un autre descripteur comprend un attribut "@schemeldUri" fournissant une description de relation spatiale (SRD) des données multimédia,
recevoir, en provenance du client, au moins un message de demande pour demander au moins un segment de données multimédia sur la base de l'au moins un identifiant de ressource uniforme de la description de présentation multimédia, l'au moins un segment demandé étant sélectionné en fonction des descripteurs ; et
fournir au client l'au moins un segment de données multimédia selon l'au moins un message de demande.

11. Support selon la revendication 9 ou la revendication 10, dans lequel un type représenté par les informations de type de projection comporte au moins l'un parmi une projection cubique, une projection cylindrique, et une projection pyramidale.
